(19) **Europäisches Patentamt**

**European Patent Office**

**Office européen des brevets**

(11) **EP 0 905 849 B1**

(12) **EUROPEAN PATENT SPECIFICATION**

| | |
|---|---|
| (45) Date of publication and mention of the grant of the patent:<br>**09.02.2005  Bulletin 2005/06** | (51) Int Cl.⁷: **H02H 3/347**, H05B 37/03 |

(21) Application number: **98203095.9**

(22) Date of filing: **16.09.1998**

(54) **Switching device for managing a multi-phase alternating-voltage network having a number of load units**

Schalteinrichtung zur Verwaltung eines Mehrphasenwechselspannungnetzes mit einer Anzahl von Lasten

Dispositif de commutation pour gérer un réseau multiphase comportant un nombre de charges

(84) Designated Contracting States:
**BE DE GB LU NL**

(30) Priority: **25.09.1997  NL 1007122**

(43) Date of publication of application:
**31.03.1999  Bulletin 1999/13**

(73) Proprietors:
- **Odink & Koenderink B.V.**
  **7482 CA Haaksbergen (NL)**
- **Montad Elektrotechnisch Adviesbureau B.V.**
  **5321 GE Hedel (NL)**

(72) Inventor: **Bennink, Johannes**
  **7602 CA Almelo (NL)**

(74) Representative: **van der Arend, Adrianus G.A.**
  **Exter Polak & Charlouis B.V.,**
  **P.O. Box 3241**
  **2280 GE Rijswijk (NL)**

(56) References cited:
  **EP-A- 0 037 751        EP-A- 0 674 376**

## Description

The invention relates to a switching device according the preamble of claim 1.

A switching device of the above type is disclosed by EP-A-0674376. With the prior art switching device each detection signal obtained by measuring the phase currents and neutral current through phase conductors and a neutral conductor respectively, are compared to a reference voltage, and when the reference voltage is exceeded by one of the detection signals a control unit controls switches, arranged in series with the conductors, to open, that is, to interrupt current flowing in the electrical system comprising said conductors.

A disadvantage of said prior art switching device is that all conductors are interrupted simultaneously without taking into account that just one phase conductor may have a short circuit to the neutral conductor or just one conductor has a leak to earth. As a result of the simultaneously interrupting of all conductors the entire electrical system is switched off from the main supply, which may be very disadvantageous in situations where safety is a major matter of concern, such as in case said electrical system comprises road lighting devices.

NL-A-8902169 discloses a switching device, which has the object to provide a protection against the occurrence of a short circuit between a phase conductor and the neutral conductor at a relatively large distance from the switching device. For this purpose, the known device comprises, for each phase conductor, a magnetic protection having a current transformer which feeds an associated current measuring relay. If a current delivered to the relay by the current transformer exceeds a predetermined value, the relay is energized and feeds an associated time relay. After the expiry of a delay time of the time relay, the latter controls a phase switching relay having a first phase switching member in series with the respective phase conductor to switch off the phase conductor. The delay time of the time relay is chosen in accordance with a maximum permissible contact time. In practice, however, a time shorter than one second has not proved possible. Furthermore, the short-circuit current increases as the short circuit is closer to the switching device. For this reason, such a magnetic protection is combined with a standard short-circuit protection having a thermal action for high currents, a second phase switching member for each phase being in series with the associated first phase switching device in such a way that, at relatively high currents, the short-circuit protection switches off the respective phase instead of the magnetic protection and does this earlier than the latter would do.

The known switching device has the drawback that only a limited monitoring, namely upward transgression, of the various currents through the phase conductors is possible. A very dangerous situation in which a load unit or another electrical member is under voltage as a consequence of an earth-leakage between a phase conductor or the neutral conductor and earth is not monitored.

Another drawback of the known device is that the monitoring takes place by means of electromechanical means, in particular relays, which make the adjustment of current reference levels and delay times difficult and inaccurate, the adjustments are difficult to match to changed circumstances, such as different loadings of the phase conductors, and the device is relatively sensitive to interference.

It is an object of the invention to eliminate the drawbacks of the prior art switching device described in the preamble of claim 1.

For this purpose, a switching device according to claim 1 is provided.

With the switching device according to the invention it is not only possible to monitor the currents of the phase conductors individually for the upward or downward transgression of one or more reference values, but the occurrence of a leakage current between each of the conductors, including the neutral, and earth can be monitored and, depending thereon, a switch associated with the earth-leakage current can be driven into the open state. As a result, a safe situation for staff and public is achieved in most cases, while only the possibly defective section of the installation is switched off and the operation of the remainder of the installation is continued. The latter is primarily of importance if the switching device feeds a public lighting installation. In addition, if a short circuit is detected between the neutral conductor and earth, the operator of the public lighting installation has, as a result, the option of choosing to keep at least one phase switched on with a view to traffic safety.

The invention is explained below for embodiments of the switching device according to the invention in combination with the associated drawings, in which:

Figure 1 shows a diagram of a first embodiment of the switching device according to the invention;

Figures 2, 3 and 4 show vector diagrams for explaining the operation of the device according to Figure 1;

Figure 5 shows a diagram of a second embodiment of the switching device according to the invention; and

Figure 6 shows a diagram of a third embodiment of the switching device according to the invention.

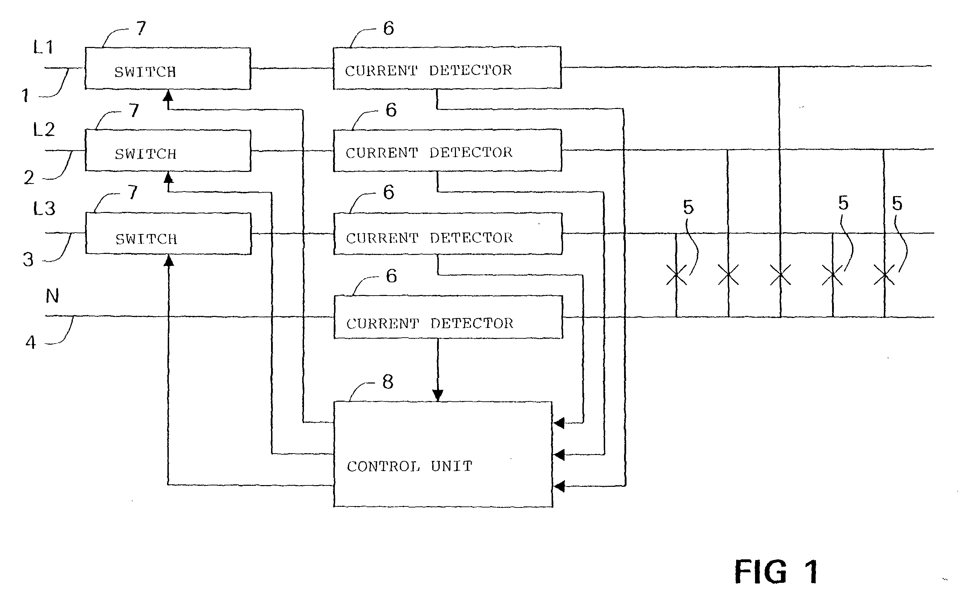

The switching device according to the invention shown in Figure 1 is intended for managing a three-phase alternating-voltage network and comprises an associated phase conductor 1, 2, 3 for each phase L1, L2, L3 and a neutral conductor 4 for a neutral phase N, all the conductors 1, 2, 3, 4 leading to a number of load units 5. The load units are, in particular, lighting fittings of a public lighting installation for which the neutral conductor 5 is common and light fittings arranged at consecutive intervals are connected in turn to the various phase conductors 1, 2, 3.

The switching device comprises, for each phase L1, L2, L3 and for the neutral phase N, a current detector 6 and, in series with each phase conductor 1, 2, 3, a switch 7. Each current detector 6 detects the current which passes through the associated phase conductor 1, 2, 3 and delivers a detection signal associated therewith to a control unit 8. Although not shown, the current detectors 6 each comprise, in particular, a current transformer followed by a current/voltage converter for delivering the detection signal to the control unit 8. Of course, the current/voltage converter may be fitted in the control unit 8 itself.

The control unit 8 is a digital processing unit which digitizes the received detection signals, compares them individually and in combination with one or more reference values and, depending on the comparison results, drives one or more switches 7 into the open state. Such a digital processing unit preferably comprises means for the external adjustment of the reference values.

The control unit 8 is suitable for monitoring the occurrence of a short circuit between one of the phase conductors 1, 2, 3 and the neutral conductor 4. In this connection, if the magnitude of a detection signal associated with a phase conductor 1, 2, 3 exceeds a predetermined reference value, the control unit opens the switch 7 associated with the phase conductor 1, 2, 3. The reference value at which this happens is, in particular, a value which does not occur during normal operation of the lighting installation, but does occur if a short circuit occurs in or at the most distant light fitting.

In the event of an excessively high (short-circuit) current through a switch 7, the control unit 8 energizes the switch 7 with a delay so that a standard short-circuit protection connected upstream can take over any switching-off of the associated phase.

Because the control unit 8 comprises a digital processing unit, the control unit 8 is suitable for monitoring the occurrence of deviations from the normal operation of the installation, in particular by monitoring the upward or downward transgression of other reference values by the detection signals, such as for detecting the failure of one or more lamps, in which case the magnitude of the detection circuit of the associated phase conductor 1, 2, 3 will be lower than a normal value.

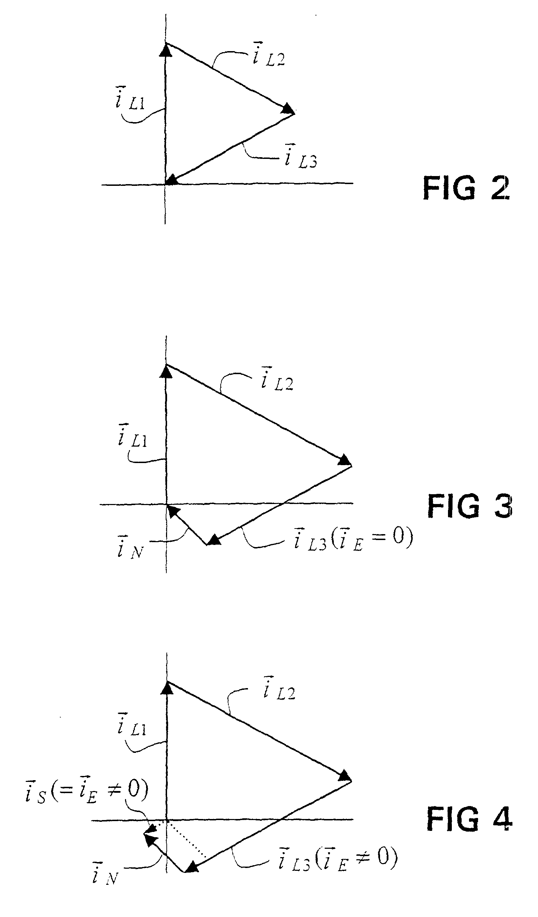

As a result of using a digitally operating control unit 8, it is also possible, according to the invention, to detect the occurrence of an earth-leakage current and to drive the lighting installation to a safe state in response thereto. This will be explained by reference to the vector diagrams of Figures 2, 3 and 4, which each show, in an orthogonal system, vectors which represent currents $\vec{i}_{L1}$, $\vec{i}_{L2}$, $\vec{i}_{L3}$, $\vec{i}_N$ which pass through the respective conductors 1, 2, 3, 4 for the phases L1, L2, L3 and the neutral phase N.

If the loading of the phases L1, L2, L3 is bal-

anced, the vectors $\vec{i}_{L1}$, $\vec{i}_{L2}$, $\vec{i}_{L3}$ have equal magnitudes and mutually enclose angles of 120°. This situation is represented in Figure 2.

If the phases L1, L2, L3 are loaded in an asymmetrical manner, the vectors $\vec{i}_{L1}$, $\vec{i}_{L2}$, $\vec{i}_{L3}$ have different magnitudes so that a current having a vector $\vec{i}_N$ passes through the neutral conductor 4. This situation is shown in Figure 3.

Because the associated current is measured for all the conductors 1, 2, 3, 4 for the phases L1, L2, L3 and the neutral phase N, the vectorial sum $\vec{i}_S$ of the associated vectors $\vec{i}_{L1}$, $\vec{i}_{L2}$, $\vec{i}_{L3}$, $\vec{i}_N$ has to be zero (zero vector) in a satisfactorily operating installation. The control unit 8 calculates said vectorial sum $\vec{i}_S$ and monitors whether it is not equal to zero. If the vector sum $\vec{i}_S$ is not equal to zero, this means that a portion of a current through a phase conductor 1, 2, 3 does not flow via the neutral conductor 4, but leaks away via another path, in particular earth. The vectorial sum mentioned consequently represents a vector $\vec{i}_E$ for the leakage current. The leakage-current vector $\vec{i}_E$ has the same direction as the vector of one of the currents, in Figure 4 $\vec{i}_{L3}$, through the phase conductors 1, 2, 3 which, in addition to a current, conducts the leakage current $\vec{i}_E$ to load units 5. If the control unit 8 detects that the magnitude of the leakage current $\vec{i}_E$ exceeds a predetermined reference value, for example 300 mA, the control unit 8 drives the switch 7 which is associated with the phase, in Figure 4 phase L3, having the same vectorial angle as the leakage-current vector, into the open state.

As a result of using the switching device according to the invention, a hitherto unachievable degree of protection is obtained against contacting, for example, light fittings which would otherwise remain under voltage as a consequence of an earth leak.

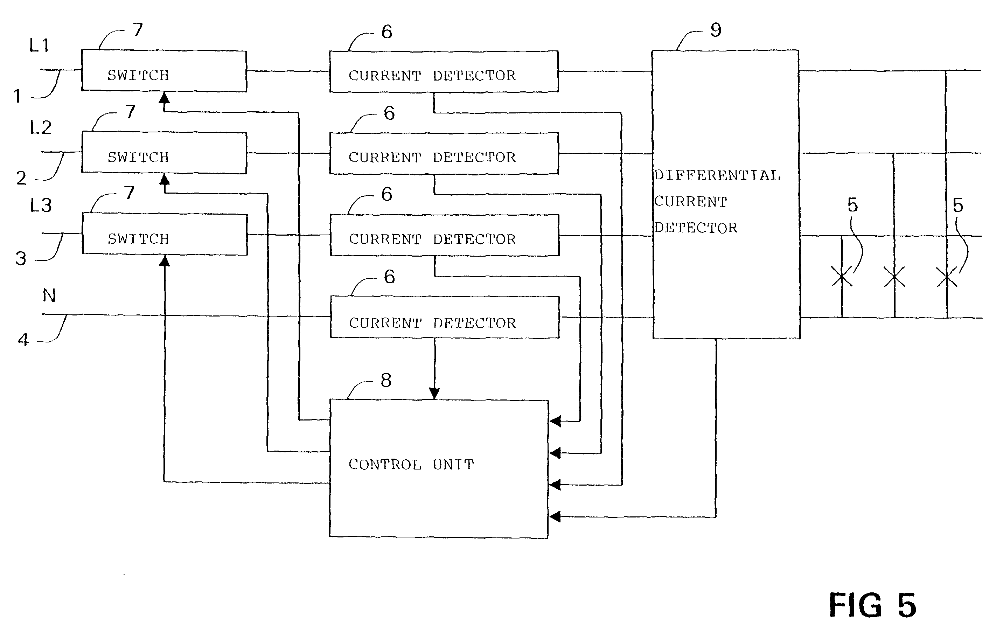

The current detectors 6 are relatively cheap, but may have different specifications because they are manufactured individually, that is to say that they may deliver different detection signals for identical currents to be measured, the mutually reinforcing noise contributions of the various detectors 6 limiting the total measurement sensitivity. Although the mutual differences and noise contributions are small, it may be desirable to increase the detection sensitivity for measuring the earth-leakage current. For this purpose, the switching device in accordance with the embodiment according to the invention shown in Figure 5 comprises, in addition, a differential current detector 9 which comprises, in particular, a current transformer having a common core for each of the conductors 1, 2, 3, 4 and a single detection winding followed by a current/voltage converter for delivering a further detection signal to the control unit 8. Apart from parasitic effects, such as noise, the further detection signal represents the abovementioned vectorial sum $\vec{i}_S$ of the currents $\vec{i}_{L1}$, $\vec{i}_{L2}$, $\vec{i}_{L3}$, $\vec{i}_N$ through the conductors 1, 2, 3, 4 and, therefore, also the said leakage-current vector $\vec{i}_E$. Because such a differential current detector 9 is manufactured as a unit, the detection signal it delivers is less subject to parasitic effects, as a result of which the control unit 8 can compare the leakage-current vector determined therewith with a lower reference magnitude, for example 30 mA, than in the embodiment of Figure 1.

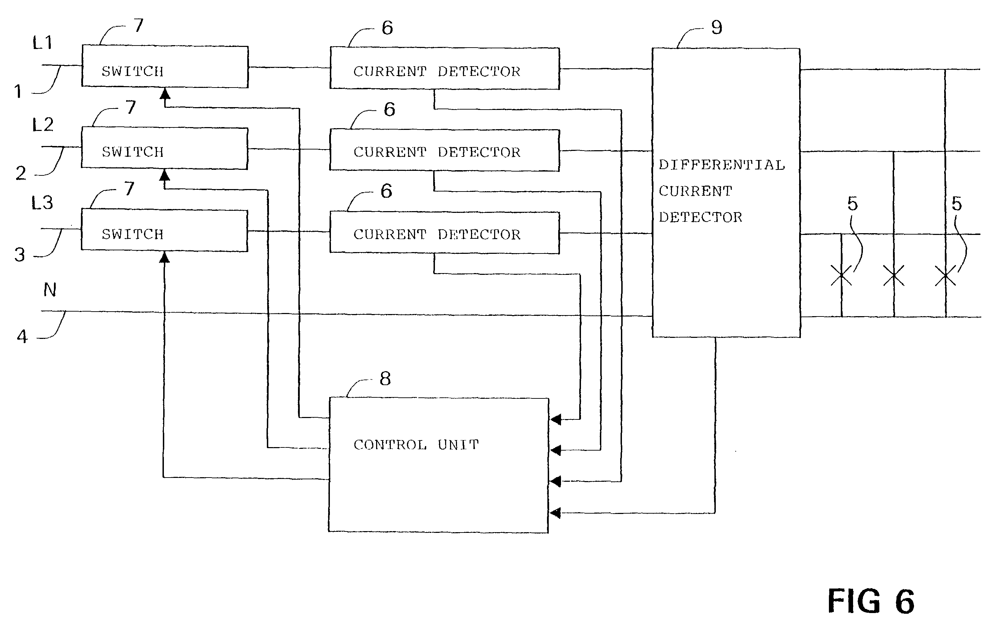

As shown in Figure 6, if a differential current detector 9 according to Figure 5 is used, the use of a separate current transformer 6 for the neutral conductor can be dispensed with and the further detection signal delivered by the differential current detector 9 can always be used to detect a leakage current.

## Claims

1. Switching device for managing a multi-phase alternating-voltage network having a phase conductor (1, 2, 3) leading to a number of load units (5) for each phase (L1, L2, L3) and a neutral conductor (4) which is common to load units (5) connected to various phase conductors (1, 2, 3), comprising, for each phase conductor and the neutral conductor (1, 2, 3, 4) a current detector (6) for delivering an associated detection signal which is dependent on the current ($\vec{i}_{L1}, \vec{i}_{L2}, \vec{i}_{L3}, \vec{i}_{N}$) through the phase conductor and the neutral conductors (1, 2, 3, 4), and in series with each phase conductor (1, 2, 3) and the load units (5) there is connected a switch (7), which is opened if the magnitude of the associated detection signal exceeds a first reference value and a control unit (8), which receives all detection signals and which controls the switches (7), **characterized in that** the control unit (8) adds the detection signals vectorially in order to obtain a first vector sum and, if the magnitude of the first vector sum exceeds a second reference value, the control unit (8) opens a switch (7), the associated phase of which substantially corresponds to the phase of the first vector sum.

2. Switching device according to claim 1, **characterized in that**, if the control unit (8) detects a current through a phase conductor (1, 2, 3) which has a higher current level than a predetermined level, the control unit (8) delays the controlling of the associated switch (7).

3. Switching device according to claim 1 or 2, **characterized in that** a current detector (6, 9) comprises a current transformer followed by a current/voltage converter, the control unit (8) has an analog/digital converter for converting the detection signals into digital values, and the control unit (8) has digital processor means for digital processing.

4. Switching device according to a preceding claim, **characterized in that** the control unit (8) comprises means for adjusting the various reference values for each phase and, for each phase, means for monitoring the upward or downward transgression of one or more of the reference values by means of the associated detection signal.

5. Switching device according to a preceding claim, **characterized in that** there is added to all the conductors (1, 2, 3, 4) in common a differential current detector (9) which comprises a current transformer followed by a current/voltage converter for supplying, to the control unit (8), a further detection signal which represents a second vector sum of the currents through the conductors (1, 2, 3, 4) and, if the magnitude of the second vector sum exceeds a third reference value, which is lower than the first reference value, the control unit (8) opens a switch (7), the associated phase of which essentially corresponds to the phase of the second vector sum.

6. Switching device according to claim 5, **characterized in that** the current detector of the neutral conductor (4) comprises the differential current transformer (9).

## Patentansprüche

1. Schalteinrichtung zur Verwaltung eines Mehrphasen-Wechselspannungsnetzes, welche einen Phasenleiter (1, 2, 3), der zu einer Anzahl von Lasten (5) für jede Phase (L1, L2, L3) führt, und einen Nullleiter (4), welcher den an die verschiedenen Phasenleiter (1, 2, 3) angeschlossen Lasten (5) gemeinsam ist, aufweist, wobei diese Schalteinrichtung umfasst: für jeden Phasenleiter und den Nullleiter (1, 2, 3, 4) einen Stromdetektor (6) für die Bereitstellung eines zugehörigen Detektorsignals, welches vom Stromfluss ($\vec{i}_{L1}, \vec{i}_{L2}, \vec{i}_{L3}, \vec{i}_{N}$) durch den Phasenleiter und die Nullleiter (1, 2, 3, 4) abhängig ist, und in Reihe mit jedem Phasenleiter (1, 2, 3) und den Lasten (5) geschalteten Schalter (7), welcher geöffnet wird, falls der Wert des zugehörigen Detektorsignals einen ersten Bezugswert übersteigt, und eine Kontrolleinheit (8), welche sämtliche Detektorsignale erhält und die Schalter (7) kontrolliert, **dadurch gekennzeichnet, dass** die Kontrolleinheit (8) die Detektorsignale vektoriell addiert, um eine erste Vektorsumme zu erhalten und, falls die Größe der ersten Vektorsumme einen zweiten Bezugswert überschreitet, die Kontrolleinheit (8) einen Schalter (7) öffnet, wobei dessen zugehörige Phase im Wesentlichen der Phase der ersten Vektorsumme entspricht.

2. Schalteinrichtung gemäß Anspruch 1, **dadurch gekennzeichnet, dass** die Kontrolleinheit (8) die Steuerung des zugehörigen Schalters (7) verzögert, falls die Kontrolleinheit (8) durch einen Phasenleiter (1, 2, 3) einen Stromfluss feststellt, welcher einen höheren Strompegel als einen vorbestimmten Pegel aufweist.

3. Schalteinrichtung gemäß Anspruch 1 oder 2, **dadurch gekennzeichnet, dass** ein Stromdetektor (6, 9) einen Stromwandler umfasst, dem ein Strom-/Spannungs-Umwandler folgt, wobei die Kontrolleinheit (8) einen Analog/Digital-Wandler für die Umwandlung des Detektorsignals in digitale Werte aufweist und die Kontrolleinheit (8) über digitale Datenverarbeitungsmittel zur Durchführung der digitalen Datenverarbeitung verfügt.

4. Schalteinrichtung gemäß einem vorangehenden Anspruch, **dadurch gekennzeichnet, dass** die Kontrolleinheit (8) Mittel für die Einstellung der verschiedenen Bezugswerte für jede Phase umfasst, und für jede Phase Mittel zur Überwachung der Über- oder Unterschreitung von einem oder mehreren Bezugswerten mittels des zugehörigen Detektorsignals.

5. Schalteinrichtung gemäß einem vorangehenden Anspruch, **dadurch gekennzeichnet, dass** sämtlichen Leitern (1, 2, 3, 4) gemeinsam ein differentieller Stromdetektor (9) hinzugefügt ist, welcher einen Stromwandler umfasst, dem ein Strom-/Spannungs-Umwandler folgt, um der Kontrolleinheit (8) ein weiteres Detektorsignal zuzuführen, welches eine zweite Vektorsumme der Stromflüsse durch die Leiter (1, 2, 3, 4) darstellt, und, falls der Wert der zweiten Vektorsumme einen dritten Bezugswert übersteigt, welcher niedriger als der erste Bezugswert ist, die Kontrolleinheit (8) einen Schalter (7) öffnet, dessen zugehörige Phase im Wesentlichen der Phase der zweiten Vektorsumme entspricht.

6. Schalteinrichtung gemäß Anspruch 5, **dadurch gekennzeichnet, dass** der Stromdetektor des Nullleiters (4) den differentiellen Stromwandler (9) umfasst.

## Revendications

1. Dispositif de commutation pour gérer un réseau à tension alternative polyphasé possédant un conducteur de phase (1, 2, 3) menant à un nombre d'unités de charge (5) pour chaque phase (L1, L2, L3) et un conducteur neutre (4) commun aux unités de charge (5) reliées aux divers conducteurs de phase (1, 2, 3), comprenant, pour chaque conducteur de phase et le conducteur neutre (1, 2, 3, 4), un détecteur de courant (6) pour délivrer un signal de détection associé qui dépend du courant ($\vec{i}_{L1}$, $\vec{i}_{L2}$, $\vec{i}_{L3}$, $\vec{i}_{N}$) traversant les conducteurs de phase et le conducteur neutre (1, 2, 3, 4), et un interrupteur (7) est relié en série avec chaque conducteur de phase (1, 2, 3) et les unités de charge (5), dans lequel celui-ci est mis en position ouverte si l'amplitude du signal de détection associé dépasse une première valeur de référence, et une unité de commande (8), qui reçoit tous les signaux de détection et commande les interrupteurs (7), **caractérisé en ce que** l'unité de commande (8) additionne vectoriellement les signaux de détection afin d'obtenir un premier vecteur somme, et si la magnitude du premier vecteur somme dépasse une seconde valeur de référence, l'unité de commande (8) ouvre un interrupteur (7), dont la phase associée correspond substantiellement à la phase du premier vecteur somme.

2. Dispositif de commutation selon la revendication 1, **caractérisé en ce que**, si l'unité de commande (8) détecte un courant traversant un conducteur de phase (1, 2, 3) qui possède une intensité supérieure à une intensité prédéterminée, l'unité de commande (8) retardera la commande de l'interrupteur associé (7).

3. Dispositif de commutation selon la revendication 1 ou 2, **caractérisé en ce qu'**un détecteur de courant (6, 9) comprend un transformateur de courant suivi d'un convertisseur courant/tension, l'unité de commande (8) possède un convertisseur analogique/numérique pour convertir les signaux de détection en valeurs numériques, et l'unité de commande (8) possède un moyen de traitement numérique pour le traitement numérique.

4. Dispositif de commutation selon une revendication précédente, **caractérisé en ce que** l'unité de commande (8) comprend un moyen pour régler les diverses valeurs de référence de chaque phase, et pour chaque phase, un moyen pour contrôler la transgression montante ou descendante de l'une ou plusieurs valeurs de référence au moyen du signal de détection associé.

5. Dispositif de commutation selon une revendication précédente, **caractérisé en ce qu'**un détecteur de courant différentiel commun (9) est ajouté à tous les conducteurs (1, 2, 3, 4), celui-ci comprenant un transformateur de courant suivi d'un convertisseur de courant/tension pour délivrer à l'unité de commande (8) un signal de détection supplémentaire qui représente un second vecteur somme des courants traversant les conducteurs (1, 2, 3, 4), et si la magnitude du second vecteur somme dépasse une troisième valeur de référence, qui est inférieure à la première valeur de référence, l'unité de commande (8) ouvrira un interrupteur (7), dont la phase associée correspond essentiellement à la phase du second vecteur somme.

**6.** Dispositif de commutation selon la revendication 5, **caractérisé en ce que** le détecteur de courant du conducteur neutre (4) comprend le transformateur de courant différentiel (9).

FIG 1

$\vec{i}_{L2}$

$\vec{i}_{L1}$

$\vec{i}_{L3}$

# FIG 2

$\vec{i}_{L2}$

$\vec{i}_{L1}$

$\vec{i}_N$

$\vec{i}_{L3}(\vec{i}_E = 0)$

# FIG 3

$\vec{i}_{L2}$

$\vec{i}_{L1}$

$\vec{i}_S(=\vec{i}_E \neq 0)$

$\vec{i}_N$

$\vec{i}_{L3}(\vec{i}_E \neq 0)$

# FIG 4

FIG 5

FIG 6

EP 0 905 849 B1